# EUROPEAN PATENT SPECIFICATION

(11) **EP 2 942 322 B1**
(45) Date of publication and mention of the grant of the patent: **14.09.2016**
(21) Application number: 14167450.7
(22) Date of filing: 07.05.2014
(51) Int. Cl.: B67C 3/28, G01F 23/292

(54) **A container filling machine with improved sensing of a filling level and related method**
Behälterfüllmaschine mit verbesserter Abtastung des Füllstands und entsprechendes Verfahren
Machine de remplissage de récipient avec une meilleure détection d'un niveau de remplissage et procédé associé

(43) Date of publication of application: 11.11.2015
(73) Proprietor: SIDEL S.p.A. CON SOCIO UNICO, Parma (IT)
(72) Inventor: Montanari, Michele, 43100 PARMA (IT)
(74) Representative: Nannucci, Lorenzo

(56) References cited:
- EP-A1- 0 237 823
- EP-A1- 1 562 027
- EP-A1- 2 192 076
- DE-A1- 3 909 405
- US-A- 4 015 645
- US-A1- 2007 107 801

## Description

The present invention relates to a filling machine, and a filling method, according to the preamble of claims 1 and 12, designed for filling containers, for example glass bottles, with pourable products, for example carbonated liquids, such as sparkling water, soft drinks and beer, to which reference is made hereinafter purely by way of example. In particular, the present invention relates to a filling machine provided with an improved sensing of a filling level of a container being filled, and to a related method.

A filling machine and a filling method according to the preambles of claims 1 and 12 is known from EP 0 237 823 A1.

In general, the present invention may be also used to advantage for any type of container, such as containers or bottles made of glass, plastics (PET), aluminum, steel and composites, and for any type of pourable product, including also non-carbonated liquids (such as still water, juices, teas, sport drinks, liquid cleaners, wine, etc), emulsions, suspensions and high viscosity liquids.

In the field of bottling of fluids, for example carbonated liquids, like beer in glass bottles, a system is known comprising a feed line for feeding a succession of empty containers to a filling machine, in turn comprising a rotating conveyor (so called "carousel"), carrying a number of filling units. The filling units are mounted to rotate continuously about a longitudinal axis, engage the empty containers, fill the containers with the desired product, and then feed the containers to a capping machine, which is coupled to the filling machine by at least one transfer wheel and which closes the containers with respective caps. In case of carbonated liquids, filling operations may include also feeding pressurized gas, such as carbon dioxide, into the containers to pressurize them, before filling the same containers with a carbonated liquid, and, afterwards, decompressing the filled containers.

Control of the level of liquid in the containers being filled is an important feature of a filling machine, to assure that the containers are filled at a desired and repeatable level, in order to meet consumer's expectation.

In a known solution, the increasing level of liquid is measured during filling operations by means of a conductive probe, which is inserted into the container, at an opening thereof. The probe includes two spaced-apart facing electrical conductors, which are normally isolated one from the other; when the liquid reaches and touches the conductors, due to the increased filling level, a short circuit occurs and thereby an electrical signal is generated, which may be used to control stopping of the filling operations.

Although simple and inexpensive, the Applicant has realized that this sensing solution is not free from drawbacks, amongst which: a generally low value of accuracy; the possibility that the isolation between the conductors is lost, giving rise to measuring errors; a poor mechanical resistance, e.g. in the event of container crash (particularly in case of glass bottles); a generally poor adjustment possibility; and a not easy maintenance.

EP 0 237 823 A1 discloses a filling machine, including a number of filling units. Each filling unit has a first conduit for introducing a filling liquid into a container, and a second conduit for passage of gas to and from the container; the first and second conduits may be coaxial. Moreover, the filling unit is provided with a contactless filling level sensor, including a signal generator, which is coupled to the gas conduit. The signal generator may be an ultrasound or light generator; in the latter case, the signal generator generates a light pulse towards the surface of the liquid, and receives back the reflected light pulse.

The aim of the present solution is consequently to solve, at least in part, the problems previously highlighted, and in general to provide an improved solution for level sensing in a filling machine.

According to the present solution, a filling machine and a related method are thus provided, as defined in the appended claims.

For a better understanding of the present invention, preferred embodiments thereof are now described, purely by way of non-limiting examples, with reference to the attached drawings, wherein:
- Figure 1 is a schematic overall view of a filling machine;
- Figure 2 is a schematic representation of a filling unit of the filling machine provided with a filling level sensor device, according to a possible embodiment of the present solution;
- Figure 3 is a schematic representation of the sensor device of Figure 2;
- Figure 4a is a perspective view of an embodiment of the sensor device of Figure 2;
- Figure 4b is a cross-sectional view of the sensor device of Figure 4a;
- Figure 5 is a block diagram of an electronic circuit in the sensor device of Figure 2;
- Figure 6 is a flow chart of operations performed in the electronic circuit of Figure 5;
- Figure 7 is a plot of a filling level detected by the sensor device of Figure 2;
- Figure 8 shows a portion of the filling unit of the filling machine, according to another embodiment of the present solution; and
- Figure 9 is a schematic representation of a filling unit, according to a further embodiment of the present solution.

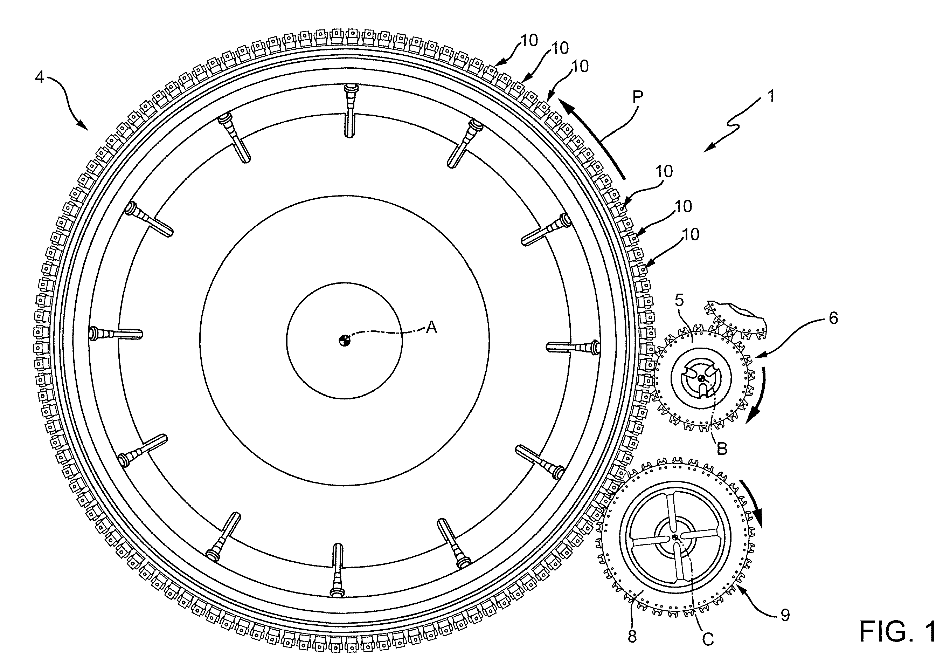

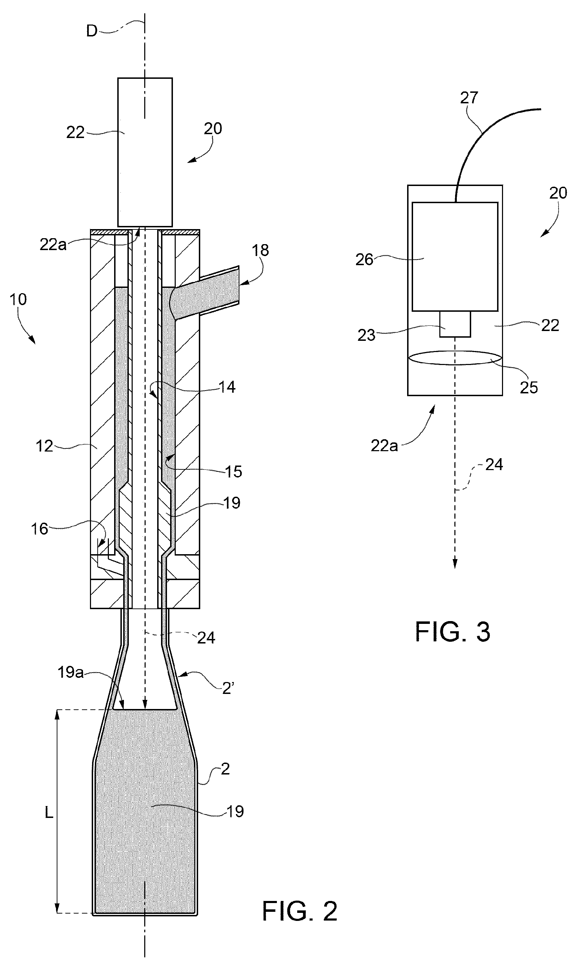

Figure 1 schematically shows a filling machine, denoted as a whole with 1, for filling containers (here not shown, denoted with 2 in Figure 2), for example glass bottles, with a filling fluid, for example a carbonated pourable food product, such as beer (but it is again underlined that other type of containers and carbonated, or non-carbonated, liquids may as well be envisaged).

Filling machine 1 comprises a conveying device, including a rotating conveyor (or carousel) 4, which is mounted to rotate continuously (anticlockwise in Figure 1) about a substantially vertical longitudinal axis A.

The rotating conveyor 4 receives a succession of empty containers from an input wheel 5, which is coupled thereto 4 at a first transfer station 6 and is mounted to rotate continuously about a respective vertical longitudinal axis B, parallel to axis A.

The rotating conveyor 4 releases a succession of filled containers to an output wheel 8, which is coupled thereto at a second transfer station 9 and is mounted to rotate continuously about a respective vertical longitudinal axis C, parallel to axes A and B.

Filling machine 1 comprises a number of filling units 10, which are equally spaced about axis A, are mounted along a peripheral edge of rotating conveyor 4, and are moved by the same rotating conveyor 4 along a path P extending about axis A and through transfer stations 6 and 9.

Each filling unit 10 is designed to receive at least one container to be filled, and to perform, during its rotation along path P, filling operations according to a filling "recipe", in order to fill the container with a fluid (e.g. a carbonated liquid). Each filling unit 10 generally includes one or more fluidic conduits and flow regulators (here not shown), which are designed to selectively couple the container to one or more feed devices, or product tanks (also not shown), of the filling machine 1.

In more details, and as shown in Figure 2 (which is not drawn to scale), each filling unit 10 includes a main body 12, for example with a tubular configuration, having a vertical extension along a longitudinal axis D that is substantially parallel to axis A of rotating conveyor 4.

Main body 12 is mechanically coupled to the rotating conveyor 4 and includes, at a bottom portion thereof, a container receiving part, designed to releasably engage a neck 2' of the container 2 that is to be filled during filling operations thereof. In a known manner (here not shown), filling unit 10 may also include gripping means, designed to hold the neck 2' of the container 2, to support it in a vertical position.

In particular, main body 12 of filling unit 10 internally defines a hollow central conduit 14, and an annular conduit 15, extending around the central conduit 14, concentrically thereto, formed between an internal side wall of the main body 12 and an outer side wall of the same central conduit 14.

Central conduit 14 extends around longitudinal axis D, for the whole vertical extension of the main body 12, is in fluid communication with the inside of the container 2 (through an opening at the neck 2' thereof), and is provided with an opening that is coupled to an air return passage 16 of filling unit 10 (only a portion of which is shown in Figure 2, for sake of clarity).

Air return passage 16 allows execution (via suitable valve arrangements, here not shown) of pressurization and/or air discharge operations related to the container 2 (in a known manner, here not discussed in detail); central conduit 14 thus operates as a venting conduit for the filling unit 10. In a possible embodiment, air return passage 16 is located at the bottom part of main body 12, in the proximity of the neck 2' of the container 2.

Annular conduit 15 also extends for the whole vertical extension of the main body 12, around central conduit 14, and it is coupled (via suitable valve arrangements, here not shown) to a product feed line 18, originated from a product tank (here not shown) coupled to the rotating conveyor 4 and containing the pourable liquid, here denoted with 19.

Annular conduit 15 is also in fluid communication with the inside of the container 2 (through the neck 2' thereof) and allows filling of the same container 2 with the pourable liquid 19 (filling taking place starting from the side walls of the container 2, as schematically shown in Figure 2).

According to a particular aspect of the present solution, filling units 10 of filling machine 1 further include a level sensing device 20, which is coupled to the main body 12, particularly to the central conduit 14 thereof, and is configured to provide sensing information related to the increasing filling level of liquid 19 within the related container 2.

In particular, level sensing device 20 implements a laser sensor, configured to carry out a contactless sensing of the position of the surface 19a of the liquid 19 within the container 2 (in other words, of the distance between surface 19a and the sensing device 20), which is indicative of the filling level (denoted with L in Figure 2) within the same container 2. Surface 19a is the interface between the liquid 19 and the remaining air in the container 2.

As also shown schematically in Figure 3, level sensing device 20 includes a casing 22, e.g. of a metallic material, in the embodiment housing a laser unit 23, including (in a respective package thereof) a laser emitter for example a semiconductor laser, such as a visible or infrared laser diode LD, generating a laser beam 24 (however, other types of laser units may as well be envisaged).

Level sensing device 20 further includes a lens unit 25, in the embodiment arranged within the casing 22, in particular at a bottom portion thereof, so as to be interposed between the laser unit 23 and a laser outlet 22a from the same casing 22; lens unit 25 is optically and operatively coupled to the laser unit 23 and configured to focus and collimate the laser beam 24 towards the liquid 19 within the container 2. Lens unit 25 may be adjusted, e.g. in terms of its arrangement or parameters, in order to modify the properties of the generated laser beam 24, e.g. the focus and collimation parameters of the same laser beam 24.

Level sensing device 20 moreover includes an electronic circuit 26, also arranged within the casing 22 and electrically and operatively coupled to the laser unit 23; and electrical connection elements 27, coupled to the electronic circuit 26 within the casing 22 and extending out of the same casing 22, so as to allow electrical connection to the outside (in particular to a power supply system and to an external computing unit or electronic device).

As shown schematically in Figure 2, in a possible embodiment, casing 22 of level sensing device 20 is arranged at a top portion of the main body 12 of filling unit 10, opposite to the bottom part engaging the container 2 (with respect to the longitudinal axis D).

In particular, the bottom portion of casing 22 is mechanically coupled to the main body 12, e.g. via a threaded coupling or other suitable coupling means, and laser outlet 22a faces the central conduit 14 defined in the same main body 12, so that laser beam 24 is directed within the same central conduit 14 (and into the container 2).

In a possible embodiment, laser unit 23 and lens unit 25 are arranged and configured in such a manner that laser beam 24 is directed (considering the axis of symmetry of the light beam) in a direction parallel to longitudinal axis D, substantially orthogonally to the surface 19a of liquid 19 within the container 2 (in a condition at rest, as it will be discussed in more details in the following).

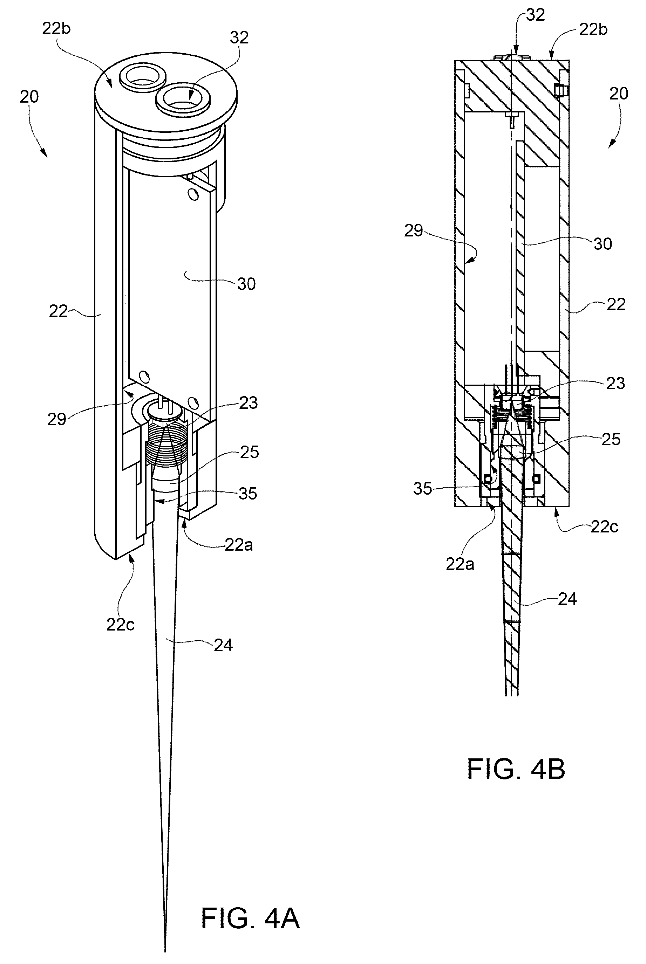

A possible embodiment of the level sensing device 20 is shown in more details in Figures 4a and 4b.

In this solution, casing 22 has a cylindrical configuration (during operation, extending along longitudinal axis D) and defines an internal space 29 where a circuit board (PCB) 30 is arranged; circuit board 30 integrates the electronic circuit 26 and is arranged vertically along the same longitudinal axis D.

Casing has an upper surface 22b, at which holes 32 are provided for passage of the electrical connection elements 27 (not shown in Figures 4a, 4b), that are connected to the circuit board 30 within the internal space 29; and a lower surface 22c, where laser outlet 22a is provided.

Laser unit 23 is coupled to the circuit board 30, facing the laser outlet 22a, so that the generated laser beam 24 is directed into a passage 35 defined by the internal space 29 towards the same laser outlet 22a. Lens unit 25 is also arranged in the same passage 35, interposed between the laser unit 23 and the laser outlet 22a.

In the exemplary embodiment, casing 22 is provided with a threaded part at the lower surface 22c, for coupling to the main body 12 of the filling unit 10.

According to an aspect of the present solution, laser unit 23 is of the light feedback (or retro-injection or retroreflection) type, in particular a distributed feedback laser (DFB), and operates based on the self-mixing interferometry principle.

A fraction of laser beam 24 is reflected by the surface 19a of the liquid 19 in the container 2 back into the laser cavity of laser unit 23, mixing (in particular, self-mixing) with the light generated by the same laser unit 23 and giving rise to an interference pattern; in a known manner (here not discussed in detail), a modulation of the laser beam 24 is induced, in particular an amplitude modulation, whose characteristics (e.g. with respect to the number and frequency of interference fringes) are a function of the distance of the reflecting surface (and thus are indicative of the filling level of the liquid within the container 2).

Laser unit 23 thus includes (in the package thereof) a photodetector, such as a photodiode, so as to monitor the effects due to the above modulation on the light pattern within the respective laser cavity.

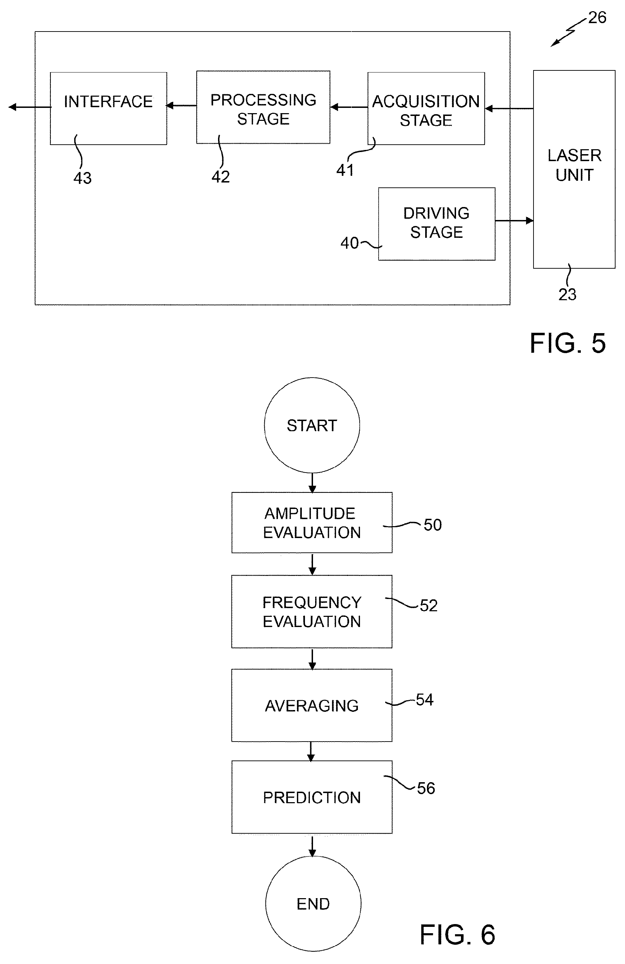

As shown schematically in Figure 5, in a possible embodiment, electronic circuit 26 includes: a driving stage 40, which is configured to drive the laser emitter of laser unit 23; an acquisition stage 41, e.g. including an FPGA (Field Programmable Gate Array), coupled to the same laser unit 23 (in particular to the associated photodetector), and configured to acquire electrical sensing signals related to the detected light pattern and to sample the same electrical sensing signals at a desired sampling frequency; a processing stage 42, e.g. including a microcontroller, coupled to the acquisition stage 41 and configured to process the sampled electrical sensing signals (e.g. via amplification and filtering operations); and an interface 43, e.g. provided by the same microcontroller, configured to interface with an output system, for example with an electronic control unit of the filling unit 10 (not shown, designed to control operation thereof in a known manner here not discussed in detail), to provide thereto, e.g. via a serial interface, the processed electrical signals, in order to allow further processing thereof, and/or a measure of the filling level inside the container 2 (it is clear, however, that part, or the whole of the processing operations on the sampled electrical signals may be performed within the same electronic circuit 26 of the level sensing device 20, or within an external circuitry).

Processing operations have to cope with some issues related to the measuring environment, which may lead to errors and inaccuracies on the measured filling level.

Indeed, liquid 19 inside the container 2, during measurement, is subject to movement, giving rise to a sloped surface 19a, ripples and waves, because of the centrifugal effects due to the rotation of the container 2 coupled to the rotating conveyor 4.

Since sensor unit 23 relies on mirror-like reflection by the surface 19a of the liquid 19, it is clear that the above effects on the surface 19a may alter the measurement and even cause part or whole of the reflected beam to miss the laser cavity.

As shown schematically in Figure 6, processing operations may envisage:
evaluating the amplitude of the electrical signal samples (step 50), in order to discard noisy samples with an amplitude lower than a lower amplitude threshold, or higher than an upper amplitude threshold (the amplitude thresholds being adjustable);
evaluating the frequency of the electrical signal samples (step 52), in order to discard noisy samples with a frequency lower than a lower frequency threshold, or higher than an upper frequency threshold (the frequency thresholds being adjustable);
implementing an averaging algorithm (step 54) on the electrical signal samples, e.g. on a given number of consecutive samples thereof; and
implementing a predictive algorithm (step 56), in particular envisaging use of a Kalman filter, in order to predict a future state of the system based on the measured samples and a model of the same system (which is updated by the same algorithm, at each new measure). Prediction may allow to assist the amplitude and frequency evaluation operations, adjusting the amplitude and frequency thresholds based on the predicted states, in order to only consider samples that are consistent to a predicted filling pattern for the container 2; moreover, prediction allows to timely and accurately evaluate the filling level at which to stop filling operations by the filling unit 10.

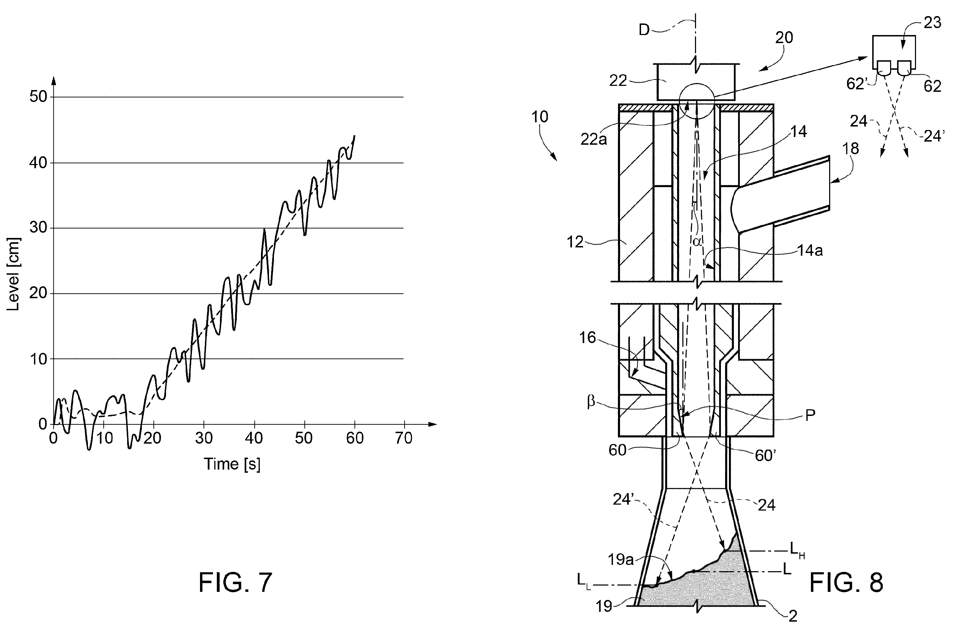

Figure 7 shows a possible result of the processing operations, depicting the filling level within the container 2, and in particular a first plot (shown with solid line) joining the sampled measured values and a second plot (sown with dashed line) representing the predicted and averaged value. The processed plot is an accurate representation of the pattern of the filling level within the container 2, thus showing the correct operation of sensing device 20.

A further aspect of the present solution envisages a modification of the sensing device 20 and filling unit 10, in order to further improve the accuracy and reliability of the filling level measures.

In particular, as schematically shown in Figure 8, laser unit 23 is in this case configured so as to generate a first and a second light beams 24, 24', each one directed at a first angle α (having a non zero value, for example in the range 0-45°) with respect to the longitudinal axis D of the filling unit 10, thereby impinging upon a respective bottom portion 60, 60' of internal wall, here denoted with 14a, of central conduit 14; in the embodiment, light beams 24, 24', as well as bottom portions 60, 60', are symmetrical with respect to longitudinal axis D.

In this case, laser unit 23 may thus include a first and a second laser emitter arranged side by side, as schematically shown in the same Figure 8 (where the same emitters are denoted with 62, 62'), each one associated with a respective lens unit (here not shown, for sake of clarity).

In particular, bottom portions 60, 60' of internal wall 14a are in this case coated with a reflective material (or a reflective layer is deposited on the same bottom portions 60, 60'); moreover, each bottom portion 60, 60' is inclined at a second angle β (having a non zero value, for example in the range 0-45°) with respect to longitudinal axis D.

As shown in the same Figure 8, a suitable choice of the values of the first and second angles α, β allows to direct the laser beams 24, 24' within the container 2 so that they are directed towards (possibly substantially orthogonal to) the surface 19a of the liquid 19, which is inclined (with respect to a horizontal plane, e.g. parallel to the ground) due to the centrifugal effects acting on the same container 2.

In particular, a first laser beam 24 impinges on the surface 19a of the liquid 19 at a first contact area, at a higher level L_{H}, while a second laser beam 24' impinges on the surface 19a of the liquid 19 at a second contact area, at a lower level L_{L}.

Processing by the processing stage 42 may in this case envisage determining a mean value between the first, higher level L_{H}, and the second, lower level L_{L}, in order to determine the actual level L of fluid 19.

According to this solution, it is more likely that the reflected beams enter the respective laser cavity in the laser unit 23 and that a reliable and accurate filling level measure is achieved.

The advantages that the described solution allows to achieve are clear from the foregoing description.

In particular, it is again underlined that it may provide: a contactless measurement, thus without affecting in any manner the liquid to be measured; a high level of accuracy (a feedback control may also be envisaged); less maintenance; easy replacement; less mechanical complexity; adjustable level set point (i.e. any desired filling level may be set for controlling the operation of the filling units 10).

Tests made by the Applicant have shown the possibility to achieve reliable filling level measures even in the presence of an inclination angle of the liquid surface 19a in the range of 10°-12° (with respect to the horizontal plane).

Moreover, the possibility to adjust the properties of the laser beam 24 (e.g. via lens unit 25) allows to finely tune the measurement to the characteristics of the particular system under investigation; for example, tests made by the Applicant have shown that, in certain operating conditions, focusing the laser beam 24 on the bottom of the container 2 may help improving the quality and reliability of the filling level measures.

As previously discussed, although the present solution has been discussed with specific reference to glass bottles, it can of course be used also in case of PET bottles, which however may be subject to deformation during transportation and filling. Another advantageous possibility is in this case using the level sensing device 20 also to detect level changes due to PET bottle deformation, and the possibility to compensate for those deformations to ensure a correct level of liquid in the finally filled and capped bottles.

Moreover, the absence of a mechanical probe, that is to be inserted within the container being filled, allows to avoid commonly used lift jacks (or other lifting means) to lift up the same container during filling operations; in the present solution, filling units 10 may instead move towards the respective containers, fixed to a respective support.

Finally, it is clear that modifications and variations may be applied to the solution described and shown, without departing from the scope of the appended claims.

In particular, the arrangement of the sensing device 20 with respect to the filling unit 10 may differ with respect to what previously discussed and shown in detail, provided that the laser unit 23 is arranged so that the laser beam 24 reaches the inside of the container 2.

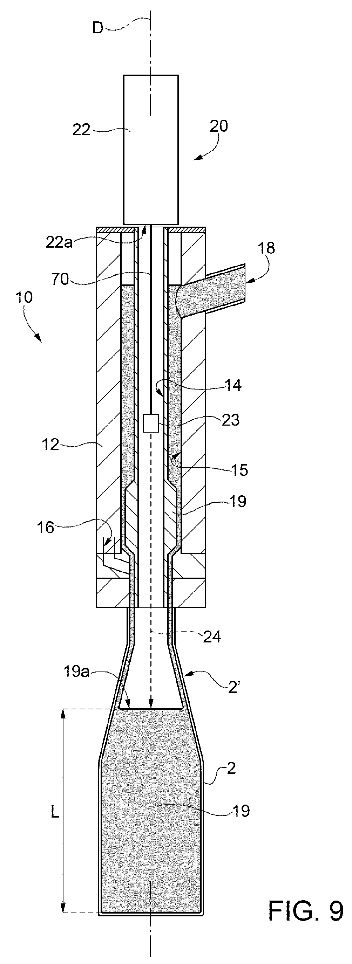

For example, as schematically shown in Figure 9, at least part of the sensing device 20, in particular the laser unit 23 thereof (and possibly the associated lens unit 25), may be arranged within the main body 12 of the filling unit 10, along the longitudinal axis D; in this case, laser unit 23 may be sized so as to be arranged, externally to the casing 22 of sensing device 20, within the central conduit 14, at a desired height along the longitudinal axis D (in any case above the point at which the air return passage 16 is coupled to the same central conduit 14, so as not to create obstacles to the passage of air). 0-rings and/or suitable fixing elements may be employed to keep the laser unit 23 (and associated lens unit 25) in place and in a vertical position during measurement. Electrical connecting means 70 (shown schematically) are in this case provided to connect the laser unit 22 to the electronic circuit 26 of sensing device 20.

Advantageously, the sensing device 20 may also be configured to be easily inserted (as a retro-fit option) to existing filling units 10.

Moreover, it is clear that the solution discussed with reference to Figure 8, with the laser unit 23 being configured to generate two distinct laser beams 24, 24' may be applied also in case the central conduit 14 has a straight internal wall 14a (without inclined bottom portions), as in the solution shown e.g. in Figure 2. Analogously, it is altogether clear that a laser unit 23 emitting a single laser beam 24 may be applied also in the case in which the central conduit 14 has an internal wall 14a with inclined bottom portions 60, 60', as shown in the same Figure 8.

It is again underlined that the discussed solution may be used also for different containers, e.g. PET containers, to be filled and/or different kind of filling fluids, e.g. not food products.

## Claims

1. A filling machine (1), including: a rotating conveyor (4); at least one filling unit (10), carried by the rotating conveyor (4) and designed to engage at least one container (2) to carry out filling thereof with a pourable product (19); and a level sensing device (20), operatively coupled to the filling unit (10) to provide information related to a filling level of the product (19) in the container (2),
wherein the level sensing device (20) includes a laser unit (23) configured to provide a contactless sensing of the position of a surface (19a) of the product (19) in the container, in order to provide the measure related to the filling level,
wherein the filling unit (10) includes a main body (12) coupled to the rotating conveyor (4), having a container receiving portion designed to releasably engage a neck (2') of the container (2) and internally defining a central conduit (14), in fluid communication with the inside of the container (2); and the level sensing device (20) is designed to be coupled to the main body (12) of the filling unit (10), and the laser unit (23) is configured to direct at least one laser beam (24) within the central conduit (14), to reach the surface (19a) of the product (19) within the container (2),
**characterized in that** the central conduit (14) extends along a longitudinal axis (D) and has an internal surface (14a) having a bottom reflective portion (60) designed to be arranged at the neck (2') of the container (2), the reflective portion (60) being inclined at an angle (β) with respect to the longitudinal axis (D); and the laser unit (23) is configured to direct the laser beam (24) towards the reflective portion (60), the reflective portion (60) being designed to direct the laser beam (24) within the container (2) towards the surface (19a) of the product (9) at a first contact area.

2. The machine according to claim 1, wherein the central conduit (14) is coupled to an air return passage (16) of the filling unit (10), and is designed to allow execution of pressurization and/or air discharge operations related to the container (2).

3. The machine according to claim 1 or 2, wherein the laser unit (23) is configured to direct the laser beam (24) at a respective angle (α) with respect to the longitudinal axis (D).

4. The machine according to any of the preceding claims, wherein the laser unit (23) is configured to generate a further laser beam (24') and to direct the further laser beam (24') towards a respective bottom reflective portion (60') of the internal surface (14a) of the central conduit (14), the respective reflective portion (60') being designed to direct the further laser beam (24') within the container (2) towards the surface (19a) of the product (9), at a second contact area, distinct with respect to the first contact area.

5. The machine according to any of the preceding claims, wherein the laser unit (23) is configured to operate based on the self-mixing interferometry principle, monitoring an interferometry light pattern due to light reflected by the surface (19a) of the product (19) within the container (2) and retro-injected into a laser cavity of the laser unit (23).

6. The machine according to claim 5, wherein the level sensing device (20) includes a casing (22), housing a circuit board (30) integrating an electronic circuit (26) electrically coupled to the laser unit (23); wherein the electronic circuit (26) includes a driving stage (40), configured to drive the laser unit (23), and a processing stage (42) configured to monitor the interferometry light pattern and to process sensing electrical signals related thereto, in order to provide the measure of the filling level.

7. The machine according to claim 6, wherein the main body (12) of filling unit (10) has a top portion opposite to the container receiving portion along a longitudinal axis (D) thereof; and wherein the casing (22) of level sensing device (20) is coupled to the main body (12), above the top portion thereof.

8. The machine according to claim 6 or 7, wherein the processing stage (42) is configured to process samples of the sensing electrical signals, and to discard samples having amplitude and/or frequency values falling outside an amplitude and/or frequency range.

9. The machine according to any of claims 6-8, wherein the processing stage (42) is configured to process samples of the sensing electrical signals, and to implement a predictive algorithm based on a Kalman filter in order to provide the measure of the filling level.

10. The machine according to any of the preceding claims, wherein the level sensing device (20) includes a lens unit (25) coupled to the laser sensor unit (23) and configured to focus and/or collimate the laser beam (24); wherein the lens unit (25) is adjustable to adjust optical properties of the laser beam (24).

11. The machine according to claim 10, wherein the laser sensor unit (23) and the lens unit (25) are configured to focus the light beam (24) on a bottom portion of the container (2), opposite to the neck (2') thereof.

12. A filling method, for a filling machine (1) including a rotating conveyor (4), and at least one filling unit (10), carried by the rotating conveyor (4) and designed to engage at least one container (2) to carry out filling thereof with a pourable product (19); the method including sensing a filling level of the product (19) in the container (2) and controlling filling based on the sensed filling level,
wherein sensing includes implementing a laser contactless sensing of the position of a surface (19a) of the product (19) in the container, in order to provide a measure of the filling level,
wherein the filling unit (10) includes a main body (12) coupled to the rotating conveyor (4), having a container receiving portion designed to releasably engage a neck (2') of the container (2) and internally defining a central conduit (14), in fluid communication with the inside of the container (2); and sensing includes directing at least one laser beam (24) generated by a laser unit (23) within the central conduit (14), to reach the surface (19a) of the product (19) within the container (2),
**characterized in that** the central conduit (14) extends along a longitudinal axis (D) and has an internal surface (14a) having a reflective portion (60) designed to be arranged at the neck (2') of the container (2), the reflective portion (60) being inclined at an angle (β) with respect to the longitudinal axis (D); and directing includes directing the laser beam (24) towards the reflective portion (60), the reflective portion (60) being designed to direct the laser beam (24) within the container (2), to reach the surface (19a) of the product (19), at a first contact area.

13. The method according to claim 12, wherein the laser contactless sensing operates based on the self-mixing interferometry principle, monitoring an interferometry light pattern due to light reflected by the surface (19a) of the product (19) within the container (2) and retro-injected into a laser cavity of the laser unit (23).

14. The method according to claim 12 or 13, wherein sensing includes directing a further laser beam (24') generated by the laser unit (23) towards a respective bottom reflective portion (60') of the internal surface (14a) of the central conduit (14), the respective reflective portion (60') being designed to direct the further laser beam (24') within the container (2) towards the surface (19a) of the product (9), at a second contact area, distinct with respect to the first contact area.

## Patentansprüche

1. Abfüllmaschine (1), mit: einer rotierenden Fördereinrichtung (4); wenigstens einer Abfülleinheit (10), die durch die drehende Fördereinrichtung (4) getragen wird, und so ausgebildet ist, dass diese wenigstens an einen Behälter (2) angreift, um ein Abfüllen desselben mit einem gießfähigen Produkt (90) durchzuführen; und einer Füllstand-Erfassungseinrichtung (20), die betriebsfähig mit der Abfülleinheit (10) gekoppelt ist, um eine Information in Bezug auf einen Füllstand des Produkts (9) im Behälter (2) bereitzustellen,
wobei die Füllstand-Erfassungseinrichtung (20) eine Lasereinheit (23) umfasst, die so ausgebildet ist, dass diese ein kontaktloses Abtasten der Position einer Oberfläche (19a) des Produkts (19) in dem Behälter bereitstellt, um die Messung in Bezug auf den Füllstand zu liefern,
wobei die Abfülleinheit (10) einen mit der drehenden Fördereinrichtung (4) gekoppelten Hauptkörper (12) umfasst, der einen Behälter-Aufnahmebereich aufweist, der so ausgebildet ist, dass dieser an einen Hals (2') des Behälters (2) lösbar angreifen kann und innen einen zentralen Kanal (14) bildet, in Fluidkommunikation mit der Innenseite des Behälters (2); und die Füllstand-Erfassungseinrichtung (20) ist so ausgebildet, dass diese mit dem Hauptkörper (12) der Abfülleinheit (10) gekoppelt werden kann, und die Lasereinheit (23) ist so ausgebildet, dass diese wenigstens einen Laserstrahl (24) in den zentralen Kanal (14) richten kann, um die Oberfläche (19a) des Produkts (19) in dem Behälter (2) zu erreichen,
**dadurch gekennzeichnet, dass** sich der zentrale Kanal (14) entlang einer Längsachse (D) erstreckt und eine innere Oberfläche (14a) hat, die einen bodenseitigen Reflektionsbereich (60) aufweist, der so ausgebildet ist, dass dieser am Hals (2'), des Behälters (2) angeordnet werden kann, wobei der Reflektionsbereich (60) in einem Winkel (β) in Bezug zur Längsachse (D) angeschrägt ist; und die Lasereinheit (23) so ausgebildet ist, dass diese den Laserstrahl (24) in Richtung des Reflektionsbereichs (60) lenkt, wobei der Reflektionsbereich (60) so ausgebildet ist, dass dieser den Laserstrahl (24) in den Behälter (2) in Richtung der Oberfläche (19a) des Produkts (9) an eine erste Kontaktfläche lenkt.

2. Maschine nach Anspruch 1, in welcher der zentrale Kanal (14) mit einem Rückluftdurchgang (16) der Abfülleinheit (10) gekoppelt ist und so ausgebildet ist, dass dieser die Ausführung der auf den Behälter (2) bezogenen Vorgänge einer Unterdrucksetzung und/oder Luftabgabe erlaubt.

3. Maschine nach Anspruch 1 oder 2, in welcher die Lasereinheit (23) so ausgebildet ist, dass diese den Laserstrahl (24) unter einem jeweiligen Winkel (α) in Bezug zur Längsachse (D) lenkt.

4. Maschine nach einem der vorhergehenden Ansprüche, in welcher die Lasereinheit (23) so ausgebildet ist, dass diese einen weiteren Laserstrahl (24') erzeugt und den weiteren Laserstrahl (24') in Richtung eines jeweiligen bodenseitigen Reflektionsbereichs (60') der Innenfläche (14a) des zentralen Kanals (14) lenkt, wobei der jeweilige Reflektionsbereich (60') so ausgebildet ist, dass dieser den weiteren Laserstrahl (24') in den Behälter (2) in Richtung der Oberfläche (19a) des Produkts (9) an eine zweite Kontaktflächen lenkt, die unterschiedlich in Bezug zur ersten Kontaktfläche ist.

5. Maschine nach einem der vorhergehenden Ansprüche, in welcher die Lasereinheit (23) so ausgebildet ist, dass diese basierend auf dem selbstmischenden Interferometrieprinzip arbeitet und dabei ein Interferometrie-Lichtmuster aufgrund des durch die Oberfläche (19a) des Produkts (19) in dem Behälter (2) reflektierten und in eine Laserkammer der Lasereinheit (23) zurückgeführten Lichts überwacht.

6. Maschine nach Anspruch 5, in welcher die Füllstand-Erfassungseinrichtung (20) ein Gehäuse (22) umfasst, das eine Leiterplatte (30) aufnimmt, welche einen elektronischen Schaltkreis (26) integriert, der mit der Lasereinheit (23) elektrisch gekoppelt ist; wobei der elektronische Schaltkreis (26) umfasst eine Treiberstufe (40), die so ausgebildet ist, dass diese die Lasereinheit (23) treibt, und eine Verarbeitungsstufe (42), die so ausgebildet ist, dass diese das interferometrische Lichtmuster überwacht und damit verbundene elektrische Abtastsignale verarbeitet, um das Maß des Füllstands zu liefern.

7. Maschine nach Anspruch 6, in welcher der Hauptkörper (12) der Abfülleinheit (10) einen oberen Bereich hat, der dem Behälter-Aufnahmebereich entlang einer Längsachse (D) desselben gegenüber liegt; und wobei das Gehäuse (22) der Füllstand-Erfassungseinrichtung (20) mit dem Hauptkörper (12) oberhalb des oberen Bereichs desselben gekoppelt ist.

8. Maschine nach Anspruch 6 oder 7, in welcher die Verarbeitungsstufe (42) so ausgelegt ist, dass Abtastwerte der elektrischen Abtastsignale verarbeitet werden und Abtastwerte mit Amplituden-und/oder Frequenzwerten, die aus einem Amplituden- und/oder Frequenzbereich fallen, verworfen werden.

9. Maschine nach einem der Ansprüche 6 bis 8, in welcher die Verarbeitungsstufe (42) so ausgebildet ist, dass Abtastwerte der elektrischen Abtastsignale verarbeitet werden und ein Vorhersagealgorithmus basierend auf einem Kaiman-Filter implementiert ist, um das Maß des Füllstands bereitzustellen.

10. Maschine nach einem der vorhergehenden Ansprüche, in welcher die Füllstand-Erfassungseinrichtung (20) eine Linseneinheit (25) umfasst, die mit der Laser-Erfassungseinheit (23) gekoppelt ist und so ausgebildet ist, dass diese den Laserstrahl (24) fokussiert und/oder ausrichtet; wobei die Linseneinheit (25) so einstellbar ist, dass optische Eigenschaften des Laserstrahls (24) eingestellt werden können.

11. Maschine nach Anspruch 10, in welcher die Laser-Erfassungseinheit (23) und die Linseneinheit (25) so ausgebildet sind, dass diese den Lichtstrahl (24) auf einen Bodenbereich des Behälters (2), entgegengesetzt zum Hals (2') desselben fokussieren.

12. Abfüllverfahren für eine Abfüllmaschine (1) mit einer rotierenden Fördereinrichtung (4) und wenigstens einer Abfülleinheit (10), die durch die rotierende Fördereinrichtung (4) getragen wird und so ausgebildet ist, dass diese an wenigstens einen Behälter (2) angreift, um ein Befüllen desselben mit einem gießfähigen Produkt (19) auszuführen; wobei das Verfahren ein Erfassen eines Füllstands des Produkts (19) in dem Behälter (2) und ein Steuern des Füllvorgangs basierend auf dem erfassten Füllstand umfasst,
wobei das Erfassen ein Implementieren einer berührungsfreien Laserabtastung der Position einer Oberfläche (19a) des Produkts (19) in dem Behälter umfasst, um ein Maß des Füllstands bereitzustellen,
wobei die Abfülleinheit (10) einen Hauptkörper (12) umfasst, der mit der rotierenden Fördereinrichtung (4) gekoppelt ist und einen Behälter-Aufnahmebereich aufweist, der so ausgebildet ist, dass dieser lösbar an einen Hals (2') des Behälters (2) angreift und innen einen zentralen Kanal (14) in Fluidkombination mit der Innenseite des Behälters (2) bildet; und wobei der Erfassungsvorgang ein Lenken eines wenigstens durch eine Lasereinheit (23) erzeugten Laserstrahls (24) in den zentralen Kanal (14) umfasst, um die Oberfläche (19a) des Produkts (19) innerhalb des Behälters (2) zu erreichen,
**dadurch gekennzeichnet, dass** sich der zentrale Kanal (14) entlang einer Längsachse (D) erstreckt und eine Innenfläche (14a) mit einem reflektierenden Bereich (60) hat, der so ausgebildet ist, dass dieser am Hals (2') des Behälters (2) angeordnet ist, wobei der reflektierende Bereich (60) unter einem Winkel (β) in Bezug zu der Längsachse (D) angeschrägt ist; und wobei der Lenkvorgang ein Lenken des Laserstrahls (24) in Richtung des reflektierenden Bereichs (60) umfasst, wobei der reflektierende Bereich (60) so ausgebildet ist, dass dieser den Laserstrahl (24) in den Behälter (2) lenkt, derart, dass die Oberfläche (19a) des Produkts (19) an einer ersten Kontaktfläche erreicht wird.

13. Verfahren nach Anspruch 12, in welchem das berührungsfreie Laserabtasten basierend auf dem selbstmischenden Interferometrieprinzips arbeitet, bei dem ein wegen des durch die Oberfläche (19a) des Produkts (19) innerhalb des Behälters (2) reflektiertes und in einen Laserraum der Lasereinheit (23) zurückgeworfenes Licht überwacht wird.

14. Verfahren nach Anspruch 12 oder 13, in welchem der Erfassungsvorgang ein Lenken eines weiteren Laserstrahls (24') umfasst, der durch die Lasereinheit (23) in Richtung eines jeweiligen bodenseitigen Reflektionsbereichs (60') der Innenfläche (14a) des zentralen Kanals (14) erzeugt wird, wobei der jeweilige Reflektionsbereich (60') so ausgebildet ist, dass dieser den weiteren Laserstrahl (24') in den Behälter (2) in Richtung der Oberfläche (19a) des Produkts (9) an eine zweite Kontaktfläche lenkt, die gegenüber der ersten Kontaktfläche unterschiedlich ist.

## Revendications

1. Machine de remplissage (1) comportant : un transporteur rotatif (4) ; au moins une unité de remplissage (10), portée par le transporteur rotatif (4) et conçue pour engager au moins un contenant (2) pour réaliser son remplissage avec un produit pouvant être versé (19) ; et un dispositif de détection de niveau (20) couplé en fonctionnement à l'unité de remplissage (10) pour fournir des informations relatives à un niveau de remplissage du produit (19) dans le contenant (2),
dans lequel le dispositif de détection de niveau (20) comporte une unité de laser (23) configurée pour fournir une détection sans contact de la position d'une surface (19a) du produit (19) dans le contenant afin de fournir la mesure relative au niveau de remplissage,
dans laquelle l'unité de remplissage (10) comporte un corps principal (12) couplé au transporteur rotatif (4) présentant une partie de réception de contenant conçue pour engager de manière détachable un goulot (2') du contenant (2) et définissant en interne un conduit central (14) en communication fluidique avec l'intérieur du contenant (2) ; et le dispositif de détection de niveau (20) est conçu pour être couplé au corps principal (12) de l'unité de remplissage (10), et l'unité de laser (23) est configurée pour diriger au moins un faisceau laser (24) dans le conduit central (14) pour atteindre la surface (19a) du produit (19) dans le contenant (2),
**caractérisée en ce que** le conduit central (14) s'étend le long d'un axe longitudinal (D) et a une surface interne (14a) présentant une partie réfléchissante inférieure (60) conçue pour être agencée sur le goulot (2') du contenant (2), la partie réfléchissante (60) étant inclinée à un angle (β) par rapport à l'axe longitudinal (D) ; et l'unité de laser (23) est configurée pour diriger le faisceau laser (24) vers la partie réfléchissante (60), la partie réfléchissante (60) étant conçue pour diriger le faisceau laser (24) dans le contenant (2) vers la surface (19a) du produit (9) sur une première zone de contact.

2. Machine selon la revendication 1, dans laquelle le conduit central (14) est couplé à un passage de retour d'air (16) de l'unité de remplissage (10) et est conçu pour permettre l'exécution d'opérations de pressurisation et/ou d'évacuation d'air relatives au contenant (2).

3. Machine selon la revendication 1 ou 2, dans laquelle l'unité de laser (23) est configurée pour diriger le faisceau laser (24) selon un angle respectif (α) par rapport à l'axe longitudinal (D).

4. Machine selon l'une quelconque des revendications précédentes, dans laquelle l'unité de laser (23) est configurée pour générer un faisceau laser supplémentaire (24') et pour diriger le faisceau laser supplémentaire (24') vers une partie réfléchissante inférieure respective (60') de la surface interne (14a) du conduit central (14), la partie réfléchissante respective (60') étant conçue pour diriger le faisceau laser supplémentaire (24') dans le contenant (2) vers la surface (19a) du produit (9) sur une seconde zone de contact distincte par rapport à la première zone de contact.

5. Machine selon l'une quelconque des revendications précédentes, dans laquelle l'unité de laser (23) est configurée pour fonctionner sur la base du principe d'interférométrie à automélange, surveillant un motif de lumière d'interférométrie dû à la lumière réfléchie par la surface (19a) du produit (19) dans le contenant (2) et rétroinjectée dans une cavité laser de l'unité de laser (23).

6. Machine selon la revendication 5, dans laquelle le dispositif de détection de niveau (20) comporte un boîtier (22), logeant une carte de circuit (30) intégrant un circuit électronique (26) couplé électriquement à l'unité de laser (23) ; dans laquelle le circuit électronique (26) comporte une étape d'entraînement (40) configurée pour entraîner l'unité de laser (23), et une étape de traitement (42) configurée pour surveiller le motif de lumière d'interférométrie et pour traiter des signaux électriques de détection relatifs à celui-ci afin de fournir la mesure du niveau de remplissage.

7. Machine selon la revendication 6, dans laquelle le corps principal (12) de l'unité de remplissage (10) a une partie supérieure en regard de la partie de réception de contenant le long d'un axe longitudinal (D) de celle-ci ; et dans laquelle le boîtier (22) du dispositif de détection de niveau (20) est couplé au corps principal (12) au-dessus de la partie supérieure de celui-ci.

8. Machine selon la revendication 6 ou 7, dans laquelle l'étape de traitement (42) est configurée pour traiter des échantillons des signaux électriques de détection et pour rejeter des échantillons présentant des valeurs d'amplitude et/ou de fréquence tombant en dehors d'une plage d'amplitude et/ou de fréquence.

9. Machine selon l'une quelconque des revendications 6 à 8, dans laquelle l'étape de traitement (42) est configurée pour traiter des échantillons des signaux électriques de détection et pour mettre en oeuvre un algorithme prédictif sur la base d'un filtre Kalman afin de fournir la mesure du niveau de remplissage.

10. Machine selon l'une quelconque des revendications précédentes, dans laquelle le dispositif de détection de niveau (20) comporte une unité de lentille (25) couplée à l'unité de capteur de laser (23) et configurée pour mettre au point et/ou collimater le faisceau laser (24) ; dans laquelle l'unité de lentille (25) est ajustable pour ajuster des propriétés optiques du faisceau laser (24).

11. Machine selon la revendication 10, dans laquelle l'unité de capteur de laser (23) et l'unité de lentille (25) sont configurées pour mettre au point le faisceau de lumière (24) sur une partie inférieure du contenant (2) en regard du goulot (2') de celui-ci.

12. Procédé de remplissage pour une machine de remplissage (1) comportant un transporteur rotatif (4) et au moins une unité de remplissage (10) portée par le transporteur rotatif (4) et conçue pour engager au moins un contenant (2) pour réaliser son remplissage avec un produit pouvant être versé (19) ; le procédé comprenant la détection d'un niveau de remplissage du produit (19) dans le contenant (2) et la commande du remplissage sur la base du niveau de remplissage détecté,
dans lequel la détection comprend la mise en oeuvre d'une détection sans contact au laser de la position d'une surface (19a) du produit (19) dans le contenant afin de fournir une mesure du niveau de remplissage,
dans lequel l'unité de remplissage (10) comporte un corps principal (12) couplé au transporteur rotatif (4) présentant une partie de réception de contenant conçue pour engager de manière détachable un goulot (2') du contenant (2) et définissant en interne un conduit central (14) en communication fluidique avec l'intérieur du contenant (2) ; et la détection comporte la direction au moins d'un faisceau laser (24) généré par une unité de laser (23) dans le conduit central (14) pour atteindre la surface (19a) du produit (19) dans le contenant (2),
**caractérisé en ce que** le conduit central (14) s'étend le long d'un axe longitudinal (D) et a une surface interne (14a) présentant une partie réfléchissante (60) conçue pour être agencée sur le goulot (2') du contenant (2), la partie réfléchissante (60) étant inclinée selon un angle (β) par rapport à l'axe longitudinal (D) ; et la direction comporte la direction du faisceau laser (24) vers la partie réfléchissante (60), la partie réfléchissante (60) étant conçue pour diriger le faisceau laser (24) dans le contenant (2) afin d'atteindre la surface (19a) du produit (19) sur une première zone de contact.

13. Procédé selon la revendication 12, dans laquelle la détection sans contact à laser fonctionne sur la base du principe d'interférométrie à automélange, surveillant un motif de lumière d'interférométrie dû à la lumière réfléchie par la surface (19a) du produit (19) dans le contenant (2) et rétroinjectée dans une cavité de laser de l'unité de laser (23).

14. Procédé selon la revendication 12 ou 13, dans laquelle la détection comporte la direction d'un faisceau laser supplémentaire (24') généré par l'unité de laser (23) vers une partie réfléchissante inférieure respective (60') de la surface interne (14a) du conduit central (14), la partie réfléchissante respective (60') étant conçue pour diriger le faisceau laser supplémentaire (24') dans le contenant (2) vers la surface (19a) du produit (9), sur une seconde zone de contact distincte par rapport à la première zone de contact.
